# FASCICULE DE BREVET EUROPEEN

(11) **EP 2 681 456 B1**
(45) Date de publication et mention de la délivrance du brevet: **26.07.2017**
(21) Numéro de dépôt: 12706055.6
(22) Date de dépôt: 29.02.2012
(51) Int. Cl.: F04F 5/20, B25J 15/06, B65G 47/91, B66C 1/02, G05B 19/042, H04L 12/403

(54) **ENSEMBLE DE MODULES GENERATEURS DE VIDE PAR EFFET VENTURI ET MODULE DE CET ENSEMBLE**
ANSAMMLUNG VON VORRICHTUNGEN ZUR ERSZEUGUNG VON VAKUUM MIT HILFE DES VENTURI EFFEKTS, UND EIN MODUL DIESER ANSAMMLUNG
GROUP OF DEVICES FOR GENERATING VACUUM USING THE VENTURI EFFECT, AND A MODULE OF THIS GROUP

(30) Priorité: 03.03.2011 FR 1151741
(43) Date de publication de la demande: 08.01.2014
(73) Titulaire: COVAL, 26120 Montelier (FR)
(72) Inventeur: MILHAU, Pierre, 26300 Bourg de Peage (FR); CECCHIN, Michel, F-26120 Montelier (FR)
(74) Mandataire: Lavialle, Bruno François Stéphane
(86) Numéro de dépôt international: PCT/EP2012/053411
(87) Numéro de publication internationale: WO 2012/117011

(56) Documents cités:
- EP-A2- 1 775 243
- FR-A- 1 521 022
- US-A- 5 244 242
- US-A- 6 147 967
- US-A1- 2001 045 755
- US-A1- 2006 288 142
- "INDUSTRIELLE KOMMUNIKATION FUER DIE AUTOMATISIERUNG", INTERNET CITATION, avril 2001 (2001-04), XP002242082, Extrait de l'Internet: URL:http://lhc-div.web.cern.ch/IndCtrl/GUA PI/CD-SimaticNet/doc/docbrowser/ [extrait le 2003-05-19]

## Description

La présente invention concerne les dispositifs de préhension par le vide et plus précisément les dispositifs de génération du vide disposés immédiatement à proximité des organes de préhension proprement dits que sont les ventouses ou les caissons.

### ARRIERE PLAN DE L'INVENTION

Les systèmes de préhension par le vide appliquent l'effet Venturi pour engendrer l'aspiration nécessaire à la préhension et la manutention d'objets au moyen de ventouses dans lesquelles on fait régner le vide engendré. Ces générateurs de vide ou pompes à vide, parfois appelés éjecteurs, se présentent sous la forme de boîtiers ou modules, alimentés par un gaz sous pression dont le passage au niveau d'un col d'écoulement interne crée l'aspiration dans une chambre au niveau de ce col et donc le vide nécessaire. Chaque module comporte donc un orifice d'entrée de gaz sous pression, un orifice d'aspiration à connecter à un organe de préhension et un orifice de sortie du gaz détendu augmenté du gaz aspiré.

Ces boîtiers ou modules sont en outre équipés de moyens de commande (électrovannes), de contrôle (manomètres, vacuostats) ou de régulation, intégrés dans chaque module, qui assurent d'une part l'exécution des ordres de commande transmis à chaque module par un BUS de terrain associé à la machine afin de réaliser un cycle de préhension issu d'un automate programmable et une optimisation du fonctionnement de chaque pompe selon les besoins en vide rencontrés et leur évolution pendant le fonctionnement du préhenseur. Cette gestion du fonctionnement de chaque pompe permet d'ajuster, au plus près du besoin, la consommation d'énergie, ici la consommation de gaz sous pression.

Les réglages de ces pompes à vide sont réalisés à l'endroit de chaque pompe qui possède une façade de communication avec des éléments de dialogue homme machine tels que des boutons poussoirs pour établir des valeurs de consigne et des éléments d'affichage pour visualiser les paramètres utiles en cours de fonctionnement. Le document US Patent 5,244,242 décrit un ensemble d'au moins deux modules générateurs de vide ayant les caractéristiques techniques telles que définis dans le préambule de la revendication 1. Dans un préhenseur de ce type, l'implantation du générateur de vide au voisinage de la ou des ventouses est nécessaire ou recommandée pour optimiser le fonctionnement de l'appareil en termes d'économie d'énergie et de temps de réponse par exemple. Il est alors difficile voire dangereux d'accéder à chacun de ces générateurs lors du fonctionnement des machines de préhension et de manutention par le vide, pour traiter le niveau de vide requis par chaque application de la machine (par exemple en fonction de la porosité du matériau à prendre et déplacer) ou pour remédier à un défaut constaté dans le cycle de fonctionnement de telle ou telle ventouse du préhenseur.

### OBJET DE L'INVENTION

Il existe donc un besoin de centraliser au niveau de l'automate programmable, la connaissance, la surveillance, le réglage et la modification des paramètres de l'installation - par exemple le niveau de vide régnant dans chaque préhenseur en fonctionnement -.

L'objet de l'invention est donc un ensemble d'au moins deux modules de génération de vide par effet venturi pour un appareil de préhension et de manutention par le vide comprenant un premier module qui dispose de moyens de communication avec une unité centrale de commande de l'appareil et au moins un deuxième module qui dispose de moyens de communications avec ledit premier module.

Plus précisément, chaque module générateur de vide comporte un boîtier sensiblement parallélépipédique dans lequel sont logés :
- les moyens pneumatiques de génération du vide et leurs canaux de liaison à un orifice d'admission d'un gaz sous pression, à un orifice d'échappement de gaz et à un orifice d'aspiration, chaque orifice étant débouchant à l'extérieur au travers de l'une des faces du boîtier et
- des moyens électroniques de pilotage et de contrôle du fonctionnement des moyens pneumatiques et leurs liaisons électriques avec une source d'alimentation électrique et des organes extérieurs de commande selon un programme défini, comportant deux connecteurs l'un d'entrée et l'autre de sortie implantés également dans l'une des faces du boîtier,
- le premier module étant un module maître qui comporte un microcontrôleur adapté au protocole de communication avec d'une part, un BUS de terrain présent dans une machine de manutention sous vide incorporant ce premier module et d'autre part, avec un BUS dédié aux autres modules,
- chacun des autres modules étant un module esclave qui comporte un microcontrôleur adapté au protocole de communication du BUS dédié.

Les moyens électroniques intégrés dans les modules de génération de vide connus permettent de recevoir des commandes de la part d'une unité centrale de commande en général programmée pour faire accomplir une séquence de fonctionnement au générateur de ce module. Pour un module maître, ces moyens électroniques permettent aussi de relayer ces commandes en direction des modules esclaves sur le BUS dédié.

Dans tous les modules, ces moyens électroniques émettent également, sur le BUS dédié en direction du module maître pour un module esclave et sur le BUS de terrain en direction de l'unité de commande pour un module maître, des signaux d'état du module, en ce qui concerne par exemple le niveau de vide atteint (au moyen d'un détecteur de dépression électronique) dont l'unité tient compte pour poursuivre ou interrompre la séquence de fonctionnement selon que le signal émis est ou non un signal de défaut.

Ces moyens électroniques sont également capables d'activer des moyens de communication (voyants par exemple) logés sur une face du générateur, pour signaler visuellement à un opérateur l'état normal ou en défaut d'un module.

Le microcontrôleur intégré dans l'électronique de chaque module générateur selon l'invention permet de déporter vers l'unité de commande, via le module maître, les opérations de réglage et de contrôle de ce générateur.

Dans le cas de générateurs dits en ilots, montés côte à côte en batterie, un générateur maître est relié au BUS machine (de terrain), les autres générateurs de l'ilot (esclaves) étant communiquant avec ce générateur maître par le biais d'un BUS local qui comporte son mode de communication propre qui est le même quel que soit le protocole du BUS de terrain. Le microcontrôleur de gestion des entrées sorties du module maître est à même de transmettre ces données à l'unité centrale de commande selon le protocole de communication qu'elle impose.

Selon une caractéristique particulière de l'invention, pour donner au constructeur de machine une totale liberté dans le choix de l'unité centrale, il est proposé deux types de modules maîtres, l'un avec un microcontrôleur adapté à communiquer avec l'unité centrale par un protocole de type ethernet industriel, l'autre avec un microcontrôleur adapté à communiquer selon d'autres protocoles tels que « ProfiBus », « ModBus », « CanOpen », « DeviceNet », etc ..., les modules esclaves de génération de vide étant totalement affranchis du protocole de communication de l'unité choisie.

Selon l'invention, le module maître est un module spécial de deux types seulement.

Ainsi l'invention permet une centralisation du paramétrage initial de chaque module à partir de l'unité centrale et du contrôle du fonctionnement. Cette faculté de paramétrer chaque module depuis l'unité centrale de commande est avantageuse car elle permet aisément une grande versatilité de la machine en ce qui concerne les produits divers qu'elle peut être amenée à traiter et ce, à partir d'une zone de cette machine en dehors de la zone à risque qui environne le bras de robot qui dans la plupart des cas constitue la machine.

Dans un mode préféré de réalisation de l'invention, les connecteurs électriques sont présents côte à côte sur une face supérieure du module, de sorte que le BUS local qui relie chaque module d'un ilot est formé par une pluralité de cabochons de liaison rigides équipés enrobant des conducteurs électriques et pourvus de connecteurs M8 parallèles aptes à être enfichés à la fois sur le connecteur d'entrée d'un module et sur le connecteur de sortie du module adjacent.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- la figure 1 est une représentation schématique d'un module de génération de vide conforme à l'invention,
- la figure 2 illustre partiellement une machine de préhension et de manutention par le vide mettant en oeuvre des modules selon l'invention.

### DESCRIPTION DETAILLEE DE L'INVENTION

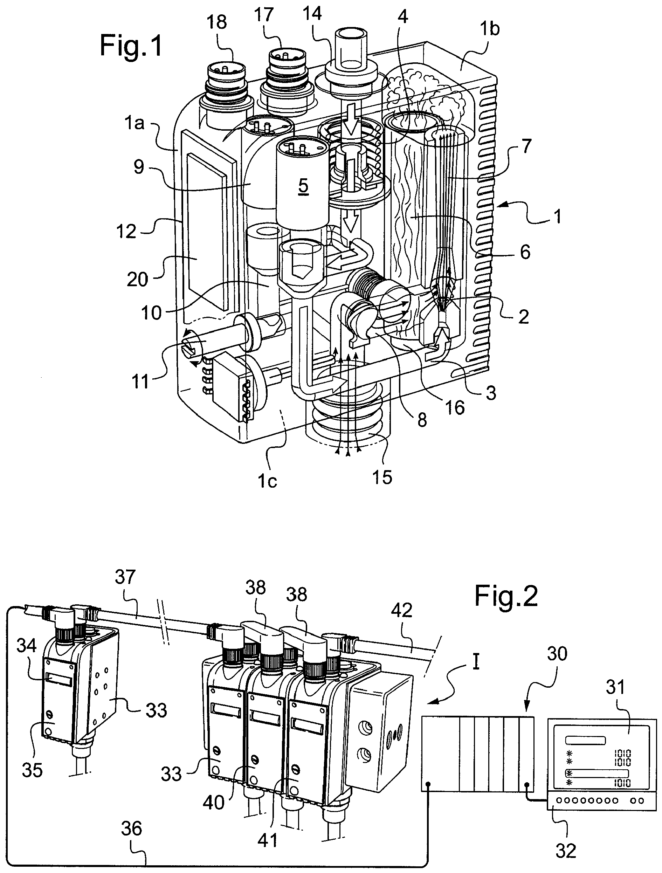

A la figure 1, on a représenté un module générateur de vide conforme à l'invention. Il se présente sous la forme d'un corps ou boîtier 1, à l'intérieur duquel sont regroupés des composants pneumatiques pour engendrer une aspiration par effet venturi et des composants électroniques pour commander ces composants pneumatiques selon une séquence de fonctionnement, généralement programmable et issue d'une unité centrale de commande non représentée, appartenant à la machine de manutention dans laquelle est incorporé ce module.

De manière connue, les composants pneumatiques comprennent un venturi 2, un canal 3 d'alimentation en gaz sous pression de ce venturi, issu d'un régulateur de pression 4 au travers d'une électrovanne 5 de commande du vide, un canal d'échappement 6, comportant un amortisseur du bruit d'échappement, du gaz pressurisé issu du mélangeur 7 du venturi. Un canal d'aspiration 8 est issu du venturi au niveau de son col.

Dans le cas de la figure, le module comporte également, en parallèle sur le canal de pression 3, une dérivation pourvue d'une électrovanne 9 de soufflage dont la sortie 10 est connectée au canal d'aspiration 8. Une restriction de débit réglable 11 est placée sur ce canal de sortie pour permettre un ajustement manuel de ce débit de soufflage, par la façade la du boîtier 1.

Les composants électroniques sont portés par une carte 12 intégrée dans le boîtier qui est électriquement reliée aux deux électrovannes 5 et 9 et qui porte un vacuostat 13 émettant un signal significatif du degré de vide régnant dans le canal 8.

Les composants pneumatiques du module communiquent avec l'environnement extérieur par un orifice 14 de sa connexion à une source de gaz sous pression, orifice ménagé dans une face supérieure 1b du boîtier 1, par un orifice 15 d'aspiration pour sa connexion à un préhenseur à vide tel qu'une ventouse non représentée, orifice ménagé dans une face inférieure 1c du boîtier 1 opposée à la face 1b et par un orifice d'échappement 16 du canal d'échappement 6, ménagé également dans la face 1c du boîtier.

Les composants électroniques portés par la carte 13 communiquent avec l'environnement extérieur de commande par des connecteurs de sortie 17 et d'entrée 18. Selon que le module est maître ou esclave, les composants électroniques portés par la carte 12 seront différents ou à tout le moins incorporeront des fonctions différentes en termes de communication et de protocole avec les autres matériels de l'installation (BUS de terrain ou BUS dédié). En outre, alors que pour les modules esclaves, les connecteurs 18 et 17 d'entrée et de sortie pourront être de même nature (type M8 par exemple), pour les modules maîtres, ces connecteurs pourront être, soit différents si le bus de terrain est de type ETHERNET, (la sortie étant de type M8, l'entrée étant de type RJ par exemple), soit identiques si le bus de terrain communique avec un protocole autre (ModBus, CanOpen, DeviceNet, ProfiBus, etc...)

Selon l'invention, chaque carte électronique comporte un microcontrôleur 20 connu en lui-même parmi ceux disponibles sur le marché, différenciés selon leur compatibilité avec les protocoles de communication en entrée et en sortie.

Dans le cas d'un module isolé, il ne peut s'agir que d'un module maître avec un microcontrôleur adapté au protocole de communication du BUS de terrain. Si plusieurs modules sont isolés, l'un d'eux sera choisi parmi les modules maîtres et les autres ne communiqueront avec l'unité centrale que via ce module maître

Dans le cas de modules en îlots, le BUS local est réalisé par les moyens de liaison des modules successifs de l'îlot, le module connecté au BUS de terrain étant maître pour assurer le relais et la traduction des requêtes et réponses des autres modules de l'ilot qui fonctionnent en esclaves.

La figure 2 illustre un exemple d'organisation de la communication entre des modules selon l'invention et une unité centrale de commande 30 avec son afficheur 31 et ses organes de dialogue homme/machine 32.

Le module 33 est un module isolé qui possède en façade un voyant 34 de suivi à distance de son état, par exemple sous forme de couleurs différentes chacune correspondant à un état de fonctionnement normal, à un défaut de fonctionnement mineur et à un défaut de fonctionnement majeur et un organe 35 de réglage du débit de soufflage.

Ce module communique directement avec le BUS de terrain 36 et est le module maître pour un ilot I de modules qui lui sont connectés par un BUS local composé d'un conducteur 37 et de cabochons 38 rigides de liaison électrique des entrées et sorties des modules 39, 40, 41 qui forment l'îlot I. Ces cabochons identiques se présenteront avantageusement sous forme de corps en matière plastique, surmoulés sur des conducteurs électriques et des connecteurs d'extrémité parallèles 38a de type M8 par exemple. Le BUS local assure également l'alimentation électrique des composants électroniques de chaque module au moyen d'un conducteur d'alimentation 42.

## Revendications

1. Ensemble d'au moins deux modules générateurs de vide, chaque module comportant un corps (1) dans lequel sont logés :
- des moyens pneumatiques (2,3,4,5,6,7,8) de génération du vide et leurs canaux de liaison à un orifice d'admission (14) d'un gaz sous pression, à un orifice (16) d'échappement de gaz et à un orifice d'aspiration (15), chaque orifice étant débouchant à l'extérieur au travers de parties(1b, 1c) de la surface du corps (1) et
- des moyens électroniques (12) de pilotage et de contrôle du fonctionnement des moyens pneumatiques et leurs liaisons électriques avec une source d'alimentation électrique et des organes extérieurs de commande selon un programme défini, comportant deux connecteurs l'un (18) d'entrée et l'autre (17) de sortie implantés également à la surface du corps (1),
**caractérisé en ce que** :
- le premier module est un module maître qui comporte un microcontrôleur (20) adapté au protocole de communication avec d'une part, un BUS de terrain présent dans une machine de manutention sous vide incorporant ce premier module et d'autre part, avec un BUS dédié aux autres modules,
- chacun des autres modules étant un module esclave qui comporte un microcontrôleur (20) adapté au protocole de communication du BUS dédié.

2. Module générateur de vide mis en oeuvre dans l'ensemble de modules selon la revendication 1, **caractérisé en ce que** le corps est en forme de boîtier (1) sensiblement parallélépipédique dans lequel sont logés :
- lesdits moyens pneumatiques de génération du vide, lesdits orifices (16) d'échappement et d'aspiration débouchant à l'extérieur au travers de l'une (1b, 1c) des faces du boîtier (1) et
- lesdits moyens électroniques (12) de pilotage lesdits connecteurs (17) d'entrée et (18) de sortie étant implantés également dans l'une (1b) des faces du boîtier.

3. Module selon la revendication 2, **caractérisé en ce que** les connecteurs électriques (17,18) sont présents côte à côte sur une face (1b) supérieure du boîtier (1) du module, de sorte que le BUS local qui relie chaque module d'un ilot (I) est formé par une pluralité de cabochons (38) de liaison rigides équipés enrobant des conducteurs électriques et pourvus de connecteurs M8 parallèles aptes à être enfichés à la fois sur le connecteur d'entrée (17) d'un module (39) et sur le connecteur de sortie (18) du module adjacent (40).

## Patentansprüche

1. Gruppe von mindestens zwei Vakuumerzeugermodulen, wobei jedes Modul einen Körper (1) umfasst, in dem untergebracht sind:
- pneumatische Mittel (2, 3, 4, 5, 6, 7, 8) zum Erzeugen des Vakuums und ihre Verbindungskanäle zur Verbindung mit einer Einlassöffnung (14) zum Einlass eines Druckgases, einer Gasauslassöffnung (16) und einer Ansaugöffnung (15), wobei jede Öffnung durch Teile (1b, 1c) der Oberfläche des Körpers (1) hindurch nach außen mündet, und
- elektronische Mittel (12) zum Steuern und Überwachen der Funktionsweise der pneumatischen Mittel und deren elektrischer Verbindungen mit einer Stromversorgungsquelle und äußeren Organen zur Steuerung gemäß einem definierten Programm, die zwei Verbinder umfassen, einen Eingangsverbinder (18) und einen Ausgangsverbinder (17), die ebenfalls an der Oberfläche des Körpers (1) angebracht sind,
**dadurch gekennzeichnet, dass**:
- das erste Modul ein Master-Modul ist, das ein Mikrosteuergerät (20) umfasst, das an das Protokoll zur Kommunikation einerseits mit einem Feldbus angepasst, der in einer Maschine zur Vakuumförderung vorhanden ist, in der dieses Modul aufgenommen ist, sowie andererseits mit einem Bus, der den anderen Modulen zugeordnet ist, angepasst ist, wobei jedes der anderen Module ein Slave-Modul ist, das ein Mikrosteuergerät (20) umfasst, das an das Kommunikationsprotokoll des zugeordneten Buses angepasst ist.

2. Vakuumerzeugermodul, das in der Gruppe von Modulen nach Anspruch 1 verwendet wird, **dadurch gekennzeichnet, dass** der Körper die Form eines im Wesentlichen parallelepipedischen Gehäuses (1) hat, in dem untergebracht sind:
- die genannten pneumatischen Vakuumerzeugermittel, wobei die genannte Auslassöffnung (16) und die genannte Ansaugöffnung durch eine (1b, 1c) der Seitenflächen des Gehäuses (1) hindurch nach außen münden, und
- wobei die genannten elektronischen Mittel (12) zum Steuern des genannten Eingangsverbinders (17) und des genannten Ausgangsverbinders (18) ebenfalls in einer (1b) der Seitenflächen des Gehäuses angebracht sind.

3. Modul nach Anspruch 2, **dadurch gekennzeichnet, dass** die elektrischen Verbinder (17, 18) nebeneinander auf einer Oberseite (1b) des Gehäuses (1) des Moduls vorhanden sind, so dass der lokale Bus, der jedes Modul mit einer Insel (I) verbindet, von einer Vielzahl von starren Verbindungskappen (38) gebildet ist, die die elektrischen Verbinder umhüllen und mit parallelen M8-Verbindern versehen sind, die dazu geeignet sind, sowohl auf den Eingangsverbinder (17) eines Moduls (39) als auch auf den Ausgangsverbinder (18) des angrenzenden Moduls (40) gesteckt zu werden.

## Claims

1. A set of at least two vacuum generator modules, each module comprising a body (1) housing:
· pneumatic vacuum generator means (2, 3, 4, 5, 6, 7, 8) and their channels for connection to an admission orifice (14) for admitting a gas under pressure, to a gas exhaust orifice (16), and to a suction orifice (15), each orifice opening to the outside via portions (1b, 1c) of the surface of the body (1); and.
· electronic means (12) for controlling and monitoring the operation of the pneumatic means and their electrical connections with an electrical power supply and external control members using a defined program, including two connectors, one being an input connector (18), and the other being an output connector (17) likewise installed at the surface of the body (1);
the set being **characterized in that**:
· the first module is a master module that includes a microcontroller (20) adapted to the communications. protocol firstly of a fieldbus present in a vacuum handling machine incorporating the first module, and secondly of a bus that is dedicated to the other modules; and
· each of the other modules is a slave module including a microcontroller (20) adapted to the communications protocol of the dedicated bus.

2. A vacuum generator module implemented in the sets of modules according to claim 1, the module being **characterized in that** its body is in the form of a substantially rectangular box (1) housing:
· said pneumatic vacuum generator means, and said exhaust and suction orifices (16) opening to the outside via one of the faces (1b, 1c) of the box (1); and
· said electronic means (12) for controlling said input and output connectors (17, 18) also being implanted in one of the faces (1b) of the box.

3. A module according to claim 2, **characterized in that** the electrical connectors (17, 18) are present side-by-side on a top face (1b) of the box (1) of the module, such that the local bus that interconnects each of the modules of an island (I) is formed by a plurality of rigid connection caps (38) covering the electrical conductors and provided with parallel M8 connectors suitable for being plugged both on the input connector (17) of a module (39) and on the output connector (18) of the adjacent module (40).
